# EUROPÄISCHE PATENTSCHRIFT

(11) **EP 2 899 003 B1**
(45) Veröffentlichungstag und Bekanntmachung des Hinweises auf die Patenterteilung: **16.11.2016**
(21) Anmeldenummer: 14189364.4
(22) Anmeldetag: 17.10.2014
(51) Int. Cl.: B28B 1/00, B28B 1/26

(54) **Druckgussform zur Herstellung eines Gießlings und Verfahren zur Herstellung einer einteiligen Toilette**
Die cast mould for producing a casting and a method for manufacturing a unitary toilet bowl
Moule de coulée sous pression destiné à la fabrication d'une pièce moulée et procédé de fabrication d'une cuvette de toilette monolithique

(30) Priorität: 30.12.2013 DE 102013114946
(43) Veröffentlichungstag der Anmeldung: 29.07.2015
(73) Patentinhaber: Duravit Aktiengesellschaft, 78132 Hornberg (DE)
(72) Erfinder: De La Corte, Juan Angel, 77716 Haslach (DE); Ledermann, Christian, 67200 Straßbourg (FR)
(74) Vertreter: Lindner Blaumeier Patent- und Rechtsanwälte

(56) Entgegenhaltungen:
- AT-B- 403 302
- DE-A1-102006 021 194
- US-A- 4 162 548

## Beschreibung

Die Erfindung betrifft eine Druckgussform, ein Verfahren, und eine Gießeinrichtung zur Herstellung eines Gießlings, der Teil einer einteiligen Toilette umfassend einen Körper, einen Wasserring und einen Tank ist, wobei der Gießling als einstückiges Bauteil den Wasserring und den oberseitig offenen Tank aufweist.

Unter einer "einteiligen Toilette" versteht man einen Sanitärgegenstand üblicherweise aus Keramik oder Porzellan, der letztlich aus drei Komponenten besteht, nämlich einerseits dem eigentlichen Körper umfassend den Schüsselbereich und die entsprechenden, dem Anschluss der Verrohrung dienenden Vorkehrungen sowie die entsprechenden Befestigungseinrichtungen, entweder zur bodenseitigen Anordnung oder zur wandseitigen Montage. Das zweite Teil ist der sogenannte Wasserring, der oberseitig auf den Körper aufgesetzt wird und der der Verteilung des eingespülten Wassers dient. Das dritte Teil ist schließlich der Tank, der ebenso körperseitig aufgesetzt wird und über den das Spülwasser in den Wasserring gelangt. Diese drei Teile werden im Stand der Technik in drei separaten Druckgussformen einzeln hergestellt, d. h., dass der Körper, der Wasserring und der Tank jeweils separate Gießlinge sind, die nach dem Formen in der jeweiligen Druckgussform zusammengeführt und aufeinandergesetzt werden. In diesem noch nicht gebrannten Zustand werden die drei Teile sodann entlang der Trennlinien durch lokales Aufbringen einer Schlickermasse miteinander leicht verbunden, man spricht hier vom "Garnieren". Anschließend wird der so hergestellte Rohling gebrannt. Die Verbindungslinien, also die Klebelinien, entlang welcher die ursprünglich drei separaten Teile über die Schlickermasse miteinander verklebt wurden, sind an der gebrannten Toilette sichtbar.

Neben dem Umstand, dass diese Klebelinien letztlich eigentlich unerwünscht sind, ist die Herstellung und das Handling dreier separater Teile zur Herstellung einer solchen einteiligen Toilette umständlich und aufwendig.
AT 403 302 B offenbart eine Druckgussform und ein Verfahren zur Herstellung eines Gießlings nach dem Oberbegriff bzw. der Ansprüche 1 und 5 Der Erfindung liegt damit das Problem zugrunde, eine Möglichkeit anzugeben, wie die Herstellung einer solchen einteiligen Toilette bestehend aus den eingangs genannten Abschnitten vereinfacht werden kann.

Zur Lösung dieses Problems ist bei einer Druckgussform der eingangs genannten Art erfindungsgemäß vorgesehen, dass die Druckgussform aus wenigstens fünf miteinander lösbar verbindbaren Formteilen besteht, nämlich einem Bodenteil, zwei Seitenteilen mit jeweils einer angeformten Hälfte einer Vorderwand, einer Rückwand und einem Deckelteil, wobei die Formteile eine Kavität, die der Außenform des Gießlings entspricht, begrenzen, und wobei am Bodenteil ein Keilelement vorgesehen ist, das zumindest abschnittsweise die Innenform des Wassertanks begrenzt.

Die erfindungsgemäße Druckform lässt es aufgrund ihres besonderen Aufbaus zu, den Wasserring und den Tank in einem einzigen Bauteil zu kombinieren, also einen Gießling herzustellen, der beide Elemente aufweist. Demzufolge sind zur Herstellung einer einteiligen Toilette nur noch zwei Bauteile, nämlich zum einen mit einer separaten Druckgussform der Körper, zum anderen mit der erfindungsgemäßen Druckgussform das zweite Bauteil umfassend Wasserring und Tank herzustellen. Nach dem Gießen sind folglich auch nur noch zwei Bauteile zu handeln, d. h., dass der Körper und das zweite Bauteil mit Wasserring und Tank aneinanderzusetzen sind, so dass sich letztlich nur noch eine Klebelinie ergibt, die sichtbar ist. Die zweite Klebelinie wie bisher im Stand der Technik gegeben entfällt.

Um dies zu ermöglichen sieht die erfindungsgemäße Druckform einen wenigstens fünfteiligen Aufbau vor. Vorgesehen ist ein Bodenteil sowie zwei Seitenteile, die jeweils eine angeformte Hälfte oder Abschnitt einer Vorderwand aufweisen. Werden Bodenteil und die Seitenteile aneinandergesetzt, ist folglich die Form an insgesamt vier Seiten bereits abgeschlossen, nämlich unterseitig, an den beiden einander gegenüberliegenden Seiten sowie vorderseitig. Der rückwärtige Abschluss erfolgt über eine entsprechende Rückwand, der oberseitige Abschluss über ein Deckelteil. Im zusammengesetzten Zustand begrenzen diese Formteile eine Kavität, die die Außenform des Gießlings definiert. Um nun den Tank definiert ausformen zu können, der ein Hohlteil ist, ist erfindungsgemäß am Bodenteil ein Keilelement vorgesehen, das die Innenform des Wassertanks zumindest abschnittsweise begrenzt. Dieses Keilelement füllt folglich zumindest abschnittsweise den Hohlraum des Tanks aus, so dass dieser mit einer entsprechenden, definierten Scherbenstärke druckgegossen werden kann. Die Ausgestaltung dieses Elements als Keilelement ist hinsichtlich der Entformbarkeit von Vorteil, als es sich nach dem Gießen leicht aus dem Gießling herausziehen lässt.

Die Druckgussform wird nach dem Schließen in der Pressmaschine angeordnet, wonach der Schlicker eingepresst wird, so dass sich der Gießling ausbildet. Nach einer definierten Standzeit wird die Druckgussform entnommen und geöffnet, wonach der Gießling mit dem in einer zweiten, vorzugsweise natürlich benachbart angeordneten Pressmaschine verbunden und garniert werden kann, wonach der eigentlich Brand erfolgt.

Die erfindungsgemäße Druckgussform lässt folglich die Herstellung eines die beiden Toilettenkomponenten "Wassering" und "Tank" aufweisenden Gießlings zu, so dass letztlich nur noch zwei separate Gießlinge zur Bildung einer einteiligen Toilette miteinander zu verkleben sind. Eine dritte spezielle Gußform ist folglich nicht mehr vonnöten. Die Herstellung kann vereinfacht und beschleunigt werden, da nur noch zwei Pressmaschinen erforderlich sind, in denen parallel die beiden Gießlinge hergestellt werden können. Auch ist das Handling vereinfacht, als nur noch zwei Bauteile handzuhaben sind.

In Weiterbildung der Erfindung ist zweckmäßigerweise zur Ausformung des Hohlraums des Wassertanks ein zweites, separat bewegliches Keilelement vorgesehen, das mit dem am Bodenteil vorgesehenen Keilelement in der Gießstellung zusammengesetzt ist und einen Formkeil bildet, der die gesamte Innenform des Wassertanks begrenzt. Der Formkeil, der den kompletten Hohlraum des Wassertanks ausfüllt ist als zweiteiliges Bauteil ausgeführt, bestehend aus dem bodenteilseitigen Keilelement und einem zweiten, beweglichen Keilelement, das bevorzugt über einen Roboterarm positioniert wird. Beide Keilelemente ergänzen sich zu dem Formkeil. Da das bewegliche Keilelement als eigenes Teil handhabbar ist, kann es nach Herstellung des Gießlings auch zunächst entnommen werden, so dass sich der gesamte Formkeil auflöst und der Gießling leichter entformt werden kann.

Um die Entformung möglichst einfach zu gestalten weist der gebildete Formkeil bevorzugt eine sich in x- und γ-Richtung zu seinem freien Ende hin verjüngende Form auf. D. h., dass sich der Formkeil in beiden Dimensionen geringfügig verjüngt. Der Wassertank verjüngt sich demzufolge ebenfalls, zumindest was seinen Innenraum angeht, von seinem oberen Ende zu seinem unteren, zum Wasserring gerichteten Ende.

Um das separat bewegliche zweite Keilelement nach dem Guss ausformen zu können ist zweckmäßigerweise am Deckel ein Druckluftanschluss mit einer nachgeschalteten Leitung vorgesehen, die im Bereich des zweiten Keilelements mündet, so dass dieses nach Öffnen der Druckgussform durch Einblasen von Druckluft ausblasbar ist. D. h., dass durch Anlegen eines hinreichenden Überdrucks das Keilelement quasi herausgedrückt wird und wiederum über den bereits beschriebenen Roboterarm entsprechend gehandhabt wird, wonach die endgültige Entformung erfolgt.

Neben der Druckgussform betrifft die Erfindung ferner ein Verfahren zur Herstellung einer mehrteiligen Toilette umfassend einen Körper, einen Wasserring und einen Tank. Dieses Verfahren zeichnet sich dadurch aus, dass unter Verwendung einer ersten Druckgussform der zuvor beschriebenen Art ein erster Gießling bestehend aus Wasserring und Tank hergestellt wird, dass unter Verwendung einer zweiten mehrteiligen Druckgussform ein zweiter Gießling, der den Körper bildet, hergestellt wird, dass nach Öffnen der ersten Druckgussform der Gießling mit einem Transportelement aufgenommen und zur zweiten Druckgussform transportiert wird und nach zumindest teilweisem Öffnen der Seitendruckgussform unterhalb des Körpers positioniert wird, wonach die zweite Druckgussform geöffnet wird und der Körper in lagerichtiger Position zum ersten Gießling auf dem Transportelement aufgenommen wird. Sind beide Elemente auf dem Transportelement positionsrichtig aufgenommen, kann die Klebeschicht durch den Schlickerauftrag hergestellt werden, wonach die dann nunmehr bereits einteilig verklebte Toilette gebrannt wird. Nach dem Brand erfolgt lediglich noch das Befestigen eines Einsprührohres und eines etwaigen Anschlusstellers durch Kleben oder auf mechanischem Wege.

Das zweite, separat bewegliche Keilelement der ersten Druckgussform wird dabei bevorzugt mittels eines Roboterarms in die erste Gießform eingebracht und entnommen. Über einen solchen Roboterarm, der letztlich im Raum um mehrere Linear- und Schwenkachsen beweglich ist, kann das zweite Keilelement sehr exakt und positionsgenau bewegt werden.

Des Weiteren betrifft die Erfindung eine Gießeinrichtung zur Herstellung einer einteiligen Toilette, umfassend eine erste Pressmaschine, der die erste erfindungsgemäße Druckgussform der zuvor beschriebenen Art zugeordnet ist, eine zweite Pressmaschine, der die zweite Druckgussform zugeordnet ist, sowie ein Transportelement zum Transportieren des ersten Gießlings von der ersten Pressmaschine zur zweiten Pressmaschine. Weiterhin kann eine Handhabungsvorrichtung mit einem Roboterarm zur Handhabung des zweiten Keilelements vorgesehen sein, wobei der Roboterarm entsprechend im Raum beweglich ist.

Weitere Vorteile, Merkmale und Einzelheiten der Erfindung ergeben sich aus dem im Folgenden beschriebenen Ausführungsbeispiels sowie anhand der Zeichnung. Dabei zeigen:
- Fig. 1: eine Explosionsdarstellung der erfindungsgemäßen Druckgussform,
- Fig. 2: eine Aufsicht auf das Bodenteil mit angesetztem zweiten Keilelement,
- Fig. 3: eine Perspektivansicht des längsgeschnittenen Bodenteils,
- Fig. 4: eine Seitenansicht auf die Schnittfläche des Bodenteils aus Fig. 3,
- Fig. 5: eine Explosionsdarstellung der erfindungsgemäßen Druckgussform mit Darstellung des fertigen Gießlings,
- Fig. 6: eine Ansicht der teilweise geöffneten Druckgussform mit gezeigtem Gießling,
- Fig. 7: eine Perspektivdarstellung der erfindungsgemäßen Gießeinrichtung, wobei lediglich die beiden ersten und zweiten Druckgussformen dargestellt sind, mit teilweise geöffneter erster und zweiter Gießform,
- Fig. 8: eine Darstellung der Gießeinrichtung nach Fig. 7 mit den Gießling aufnehmendem Transportelement,
- Fig. 9: eine Darstellung mit dem den Gießling von der ersten zur zweiten Druckgussform transportierenden Transportelement,
- Fig. 10: eine Darstellung mit unterhalb der zweiten Druckgussform positioniertem Transportelement,
- Fig. 11: die nunmehr ebenfalls geöffnete zweite Druckgussform, wobei der Körper auf dem Gießling aufgenommen ist,
- Fig. 12: eine Perspektivansicht des Transportelements mit aufgenommenem Körper und Gießling, und
- Fig. 13: eine Explosionsdarstellung des Körpers und des Gießlings vor dem Zusammenfügen.

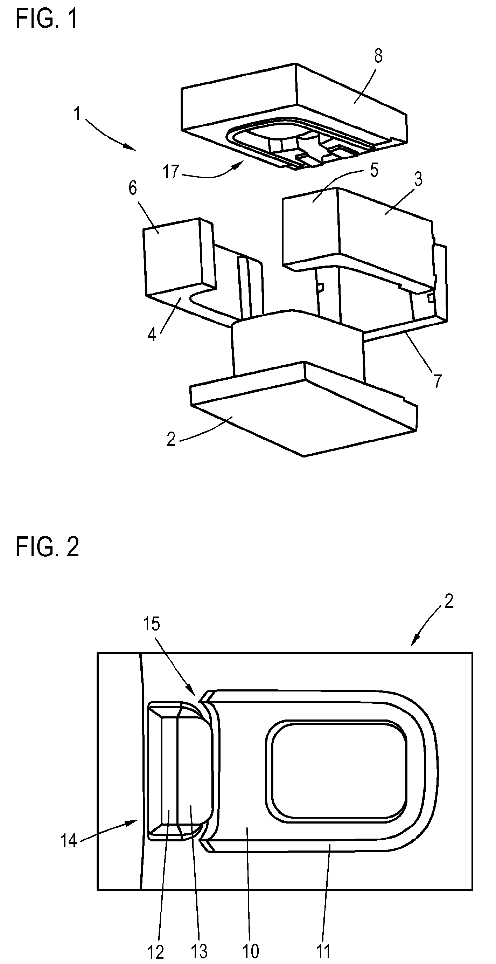

Fig. 1 zeigt in einer Explosionsdarstellung eine erfindungsgemäße Druckgussform 1, bestehend aus einem Bodenteil 2, zwei Seitenteilen 3, 4, an denen jeweils eine

Hälfte 5, 6 einer Vorderwand vorgesehen ist, ferner einer Rückwand 7 sowie einem Deckelteil 8. Im geschlossenen Zustand definieren die Formteile eine Kavität, in der ein Gießling hergestellt wird, bestehend aus einem Wasserring und einem Tank, wobei beide ein einteiliges Gießteil bilden.

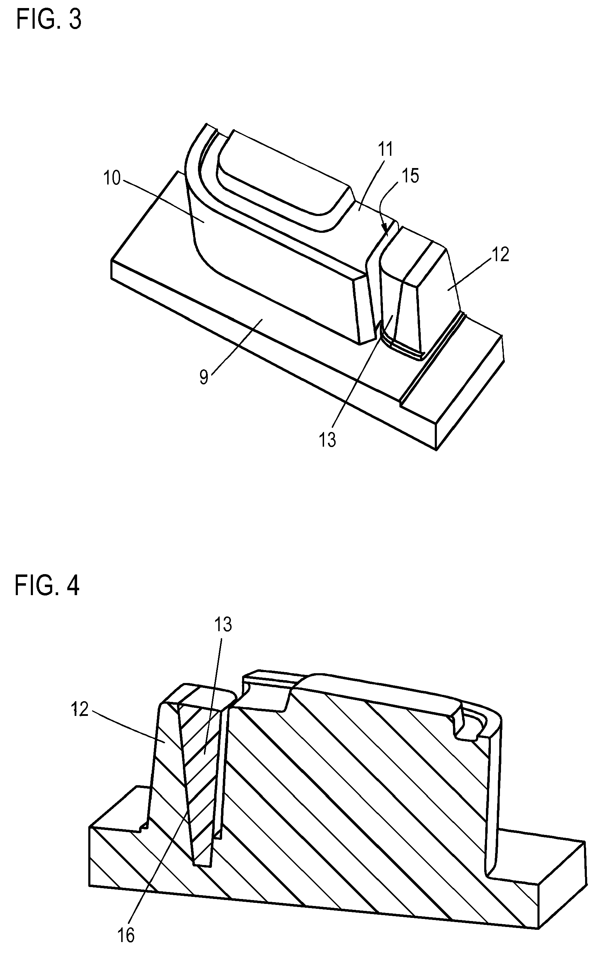

Die Fig. 2 - 4 zeigen in Auf- und Schnittansichten das Bodenteil 2. Dieses besteht aus der Grundplatte 9 und einem davon vorstehenden Formkörper 10, an dessen Oberseite eine Formstruktur 11 zur Bildung des Wasserrings ausgebildet ist. Benachbart zu dem Formkörper 10 ist ein erstes, von der Grundplatte 9 vorspringendes Keilelement 12. Zu diesem benachbart angeordnet ist ein lösbares, also separates zweites Keilelement 13. Die Keilelemente 12, 13 ergänzen sich zu einem Formkeil 14, der den Hohlraum des Wassertanks des Gießlings ausfüllt, also die Innenfläche des Wassertanks begrenzt. Ersichtlich ist zwischen dem zweiten Keilelement 13 und dem Formkörper 10 ein Spalt 15, der die Vorderseite des Tanks definiert. Die Rückseite des Tanks sowie Seiten des Tanks werden über die Seitenteile 3, 4 respektive die Rückwand 7 definiert, die in der Montagestellung, also bei geschlossener Form benachbart zu dem Formkeil 14 verlaufen.

Die beiden Keilelemente 12, 13 liegen über eine schräg verlaufende ebene Fläche 16 aneinander an. Dies ermöglicht es, das Bodenteil 2 bezogen auf die geschlossene Form nach unten herauszuziehen, wobei sich das erste Keilelement 12 vom zweiten Keilelement 13 löst. Das zweite Keilelement 13 kann sodann ebenfalls entnommen werden, wenn dies nicht bereits gleichzeitig respektive unmittelbar danach erfolgt, üblicherweise durch Einblasen von Druckluft über einen entsprechenden Druckluftanschluss an einem der Formteile.

Wie die Fig. 2 - 4 zeigen verjüngt sich der Formkeil sowohl in Breiten- als auch in Längsrichtung vom unteren, grundplattennahen Ende zum oberen freien Ende. Dies ermöglicht die entsprechende Entformbarkeit der Keilelemente 12, 13 aus dem gegossenen Tank.

Die Seitenwände 3, 4 sowie die Rückwand 7 dienen primär der seitlichen Begrenzung im Bereich des Tanks und als Auflagen für das Deckelteil 8. Das Deckelteil 8 seinerseits weist eine entsprechende Formgeometrie 17 auf, die den Wasserring definiert, in Verbindung mit der entsprechenden Formausnehmung 11 am Körper 10, und die die Unterseite des Wassertanks definiert. Sämtliche Formteile bestehen wir bekannt aus porösem Kunststoffmaterial und ermöglichen so die Verwendung der Form 1 in einer Pressmaschine.

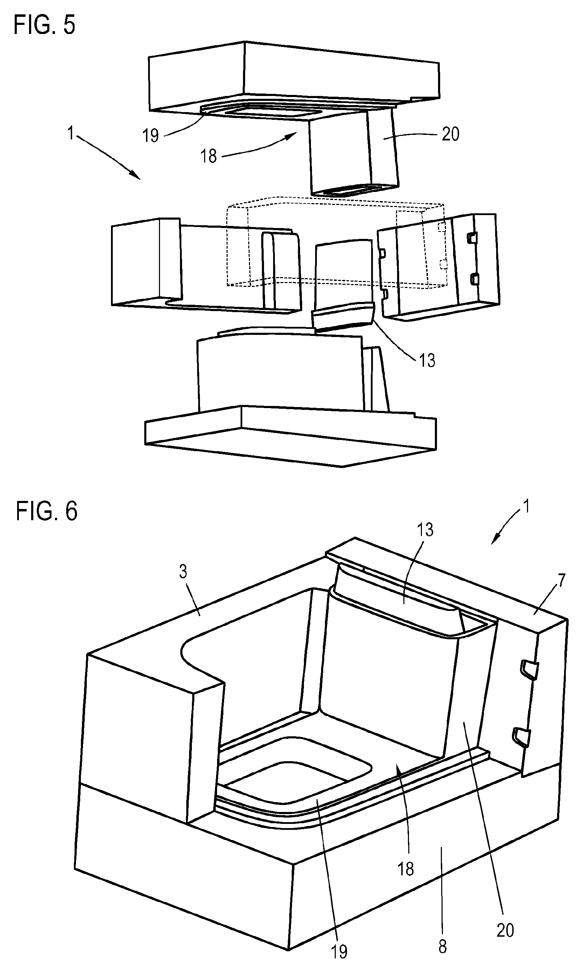

Fig. 5 zeigt exemplarisch nochmals eine Explosionsdarstellung der Druckgussform 1, wobei hier das zweite Keilelement 13 separat dargestellt ist, nachdem es als separates Formteil mittels eines nicht näher gezeigten Roboterarms manipuliert wird, also insbesondere an dem Bodenteil 2 angesetzt wird respektive auch beim Entformen hierüber gegriffen wird. Das vordere Seitenteil ist hier lediglich gestrichelt gezeichnet.

Gezeigt ist ferner der Gießling 18, bestehend aus dem Wasserring 19 sowie dem einstückig darin angeformten Tank 20, der innen hohl ist, und wie beschrieben über den Formkeil 14, gebildet aus den Keilelementen 12, 13 definiert wird.

Fig. 6 zeigt eine Darstellung der Druckgussform 1 nach Herstellen des Gießlings 18, wobei hier das Bodenteil 2 nebst seinem einstückig daran angeformten Keilelement 12 sowie die eine Seitenwand entfernt wurde. Dargestellt ist folglich noch das Deckelteil 8, die Rückwand 7 sowie die eine Seitenwand 3 und das zweite Keilelement 13, das noch im Inneren des Tanks 20 aufgenommen ist. Ersichtlich ist der Gießling 18 folglich ein einstückiges Bauteil bestehend aus Wasserring 19 und Tank 20.

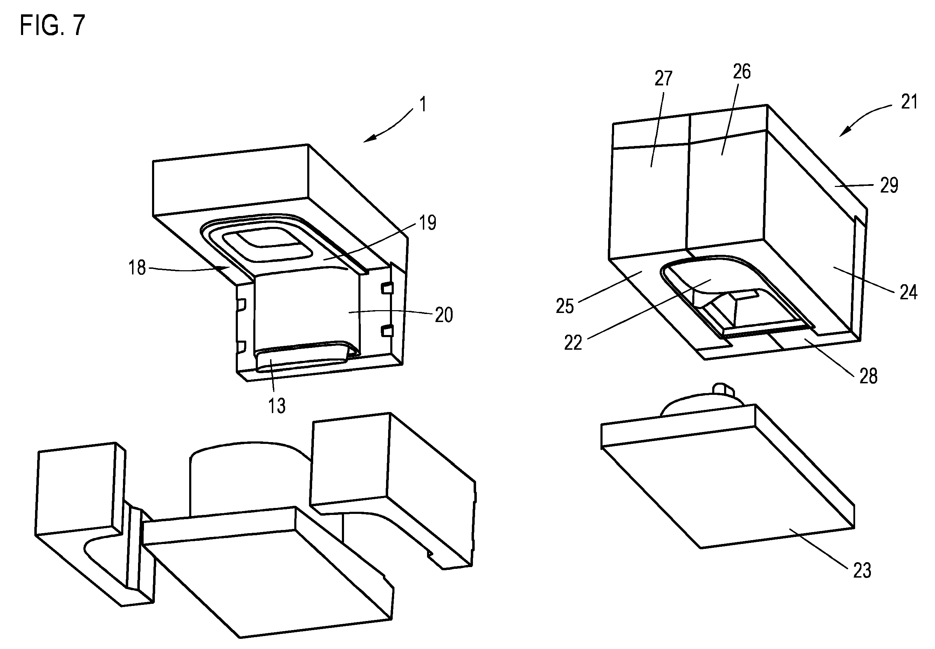

Die Fig. 7 - 11 zeigen schematisch den Ablauf eines Herstellverfahrens für eine einteilige Toilette. Vorgesehen ist die erfindungsgemäße erste Druckgussform 1 die zur Herstellung des Gießlings 18 bestehend aus Wasserring 19 und Tank 20 dient. Vorgesehen ist des Weiteren eine zweite Druckgussform 21, die der Herstellung des Körpers 22, der unterhalb des Wasserrings 19 und des Tanks 20 sitzt, dient.

Beide Druckgussformen 1 und 21 sind separaten Pressmaschinen zugeordnet, die hier nicht näher gezeigt sind. Es handelt sich um übliche Pressmaschinen, die der Durchführung von keramischem Druckguss dienen.

Wie Fig. 7 zeigt, ist der Gießling 18 bereits gegossen, die Form ist insoweit geöffnet, lediglich das zweite Keilelement 13 ist hier noch im Inneren des Tanks 20 gezeigt. Es wird über einen entsprechenden Roboterarm, der hier nicht näher gezeigt ist, entnommen, so dass der Gießling 18 letztlich entnommen werden kann. Auch die Druckgussform 21 ist hier bereits teilweise geöffnet dargestellt, das dortige Bodenteil 23 ist bereits entnommen, die beiden Seitenwände 24, 25, die auch hier entsprechende Hälften 26, 27 zur Bildung der Vorderwand aufweisen, die Rückwand 28 sowie das Deckelteil 29 sind noch geschlossen. Der hergestellte Gießling, also der Körper 22, ist noch im Inneren aufgenommen.

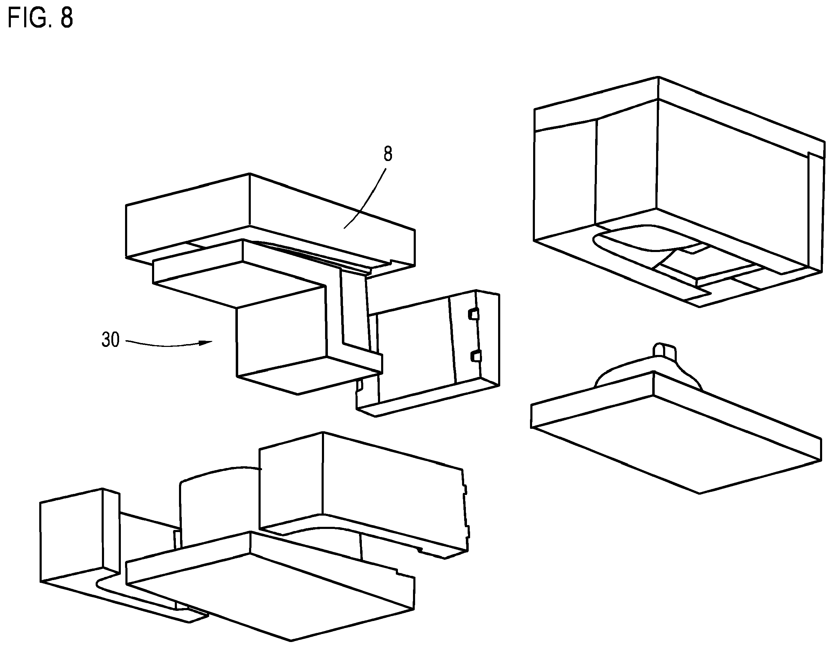

Wie Fig. 8 zeigt, wird nun ein Transportelement 30 über eine nicht näher gezeigte Handhabungsvorrichtung wie beispielsweise ebenfalls einen Roboterarm oder Ähnlichem unterhalb des Gießlings 18 positioniert. Der Wasserring 19 ragt dabei etwas aus dem Deckelteil 8 heraus, so dass das unterfahrende Transportelement 30 sowohl den Tank 20 randseitig auflagert, als auch den Wasserring 19. Dieser liegt mit seiner aufgrund der Formöffnung freien Seite ebenfalls auf dem Transportelement 30 auf. Hierüber wird vermieden, dass es beim endgültigen Ausformen des Gießlings 18 zu einer, wenngleich geringen, unkontrollierten Abwärtsbewegung des Gießlings und Aufschlagen auf dem Transportelement 30 kommt, was zu einer Verformung führen könnte. Das Transportelement 30 nimmt folglich den Gießling 18 sicher und bewegungsfrei auf.

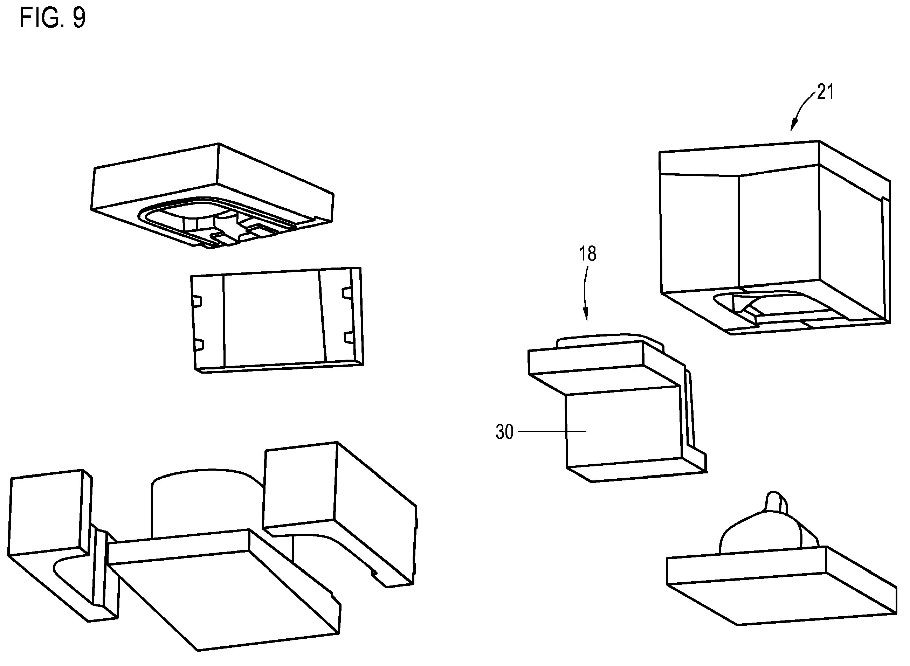

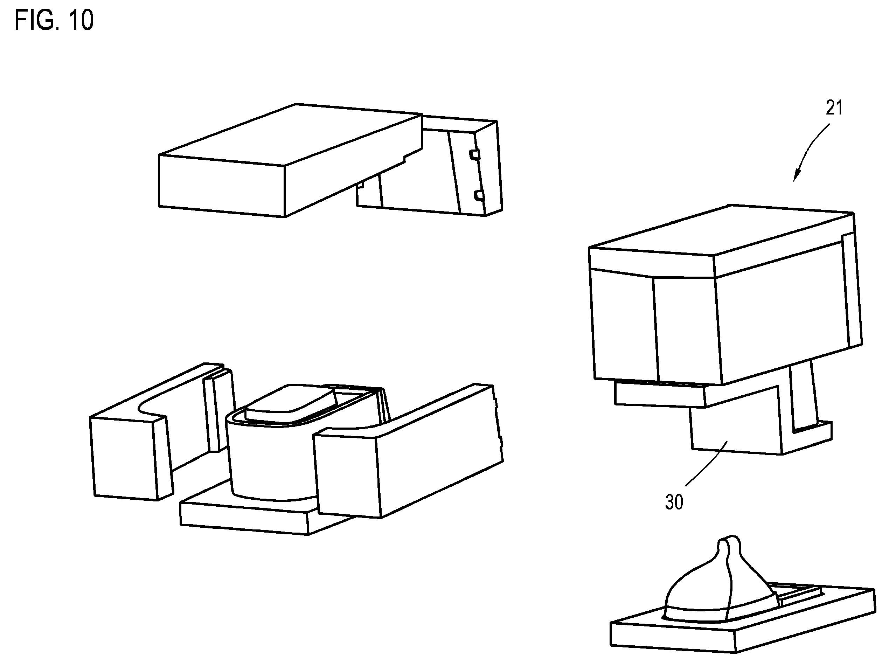

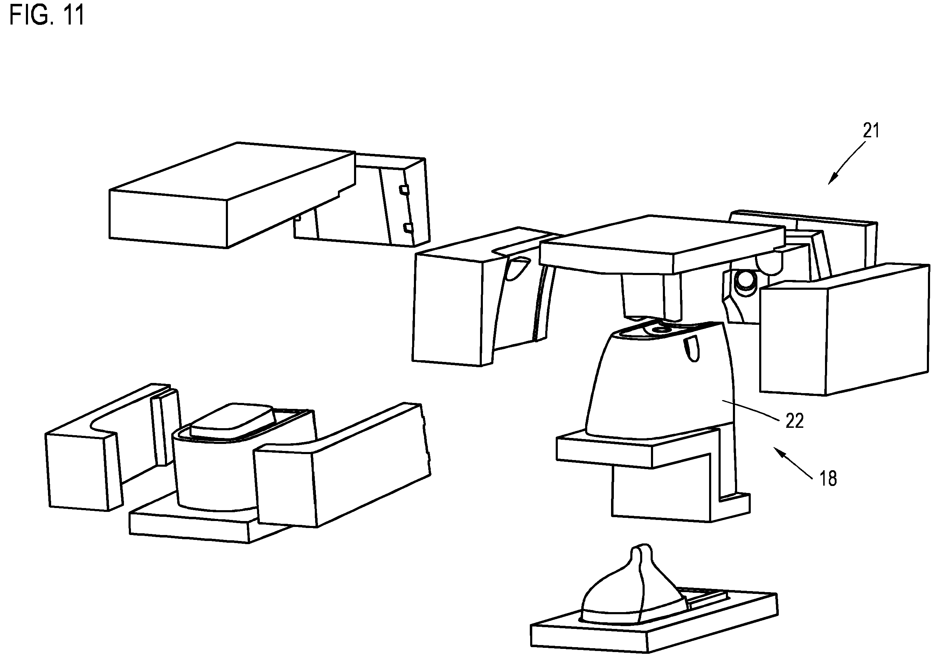

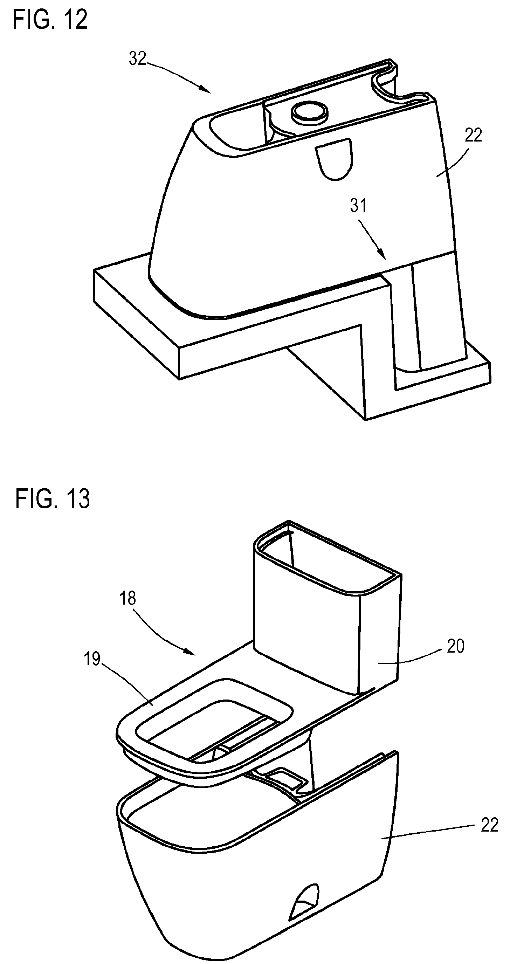

Sodann wird nach endgültiger Ausformung des Gießlings 18 das Transportelement 30 zur zweiten Druckgussform 21 verfahren, siehe Fig. 9. Es wird, siehe Fig. 10, unterhalb der Druckgussform 21 positioniert, und zwar derart, dass der Gießling 18 positionsgenau unterhalb des Körpers 22 angeordnet wird. Die freie Oberseite des Gießlings 18 (siehe Fig. 9) ist, wenn das Transportelement 30 seine Endstellung in Fig. 10 erreicht hat, am Körper 22 anliegend positioniert. Sodann wird, siehe Fig. 11, die zweite Druckgussform 21 ebenfalls geöffnet, der Körper 22 wird freigegeben. Er ist, siehe Fig. 11 und insbesondere Fig. 12, exakt relativ zum Gießling 18 positioniert. Es ergibt sich nur noch eine umlaufende Trennlinie 31 am Übergang der Unterseite des Körpers 22 zur Oberseite des Gießlings 18. Entlang dieser Linie wird sodann vor dem Brand unter Verwendung von Schlickermasse eine Klebelinie erzeugt, mithin also die beiden Gießteile miteinander verbunden. Ersichtlich ist hier nur noch eine Klebelinie gegeben, nachdem nur zwei Gießlinge zur Bildung einer einteiligen Toilette miteinander zu verbinden sind.

Fig. 13 zeigt schließlich nochmals in einer Explosionsdarstellung die beiden Gießlinge, nämlich zum einen den Gießling 18 bestehend aus Wasserring 19 und Tank 20, zum anderen den Gießling, der den Körper 22 bildet. Im zusammengesetzten Zustand, siehe Fig. 12, bilden sie letztlich eine einteilige Toilette 32, die nach dem Brand ein einteiliges, aufgrund der Klebeverbindung nunmehr unlösbar verbundenes Bauteil bildet.

Wesentliches Element ist dabei die erste Druckgussform 1 mit ihrem speziellen Aufbau insbesondere im Hinblick auf den zweiteiligen Formkeil 14, der den Tank 20 ausfüllt bzw. innenseitig begrenzt, und der aufgrund seiner sich in beiden Richtungen verjüngenden Geometrie die einfache Entformbarkeit ermöglicht. Dies ermöglicht wiederum die einstückige Anformung des Tanks 20 am Wasserring 19, mithin also die Ausbildung des einteiligen Gießlings 18.

Abschließend ist festzustellen, dass die Gießposition gegenüber den in den Figuren gezeigten Darstellungen auch um 180° gedreht werden kann, d. h. dass die Gießformen 1 und 21 um 180° um die Horizontale gedreht positioniert werden. Der Gießling 18 würde dann auf den Körper 22 aufgesetzt werden.

## Patentansprüche

1. Druckgussform zur Herstellung eines Gießlings, der Teil einer einteiligen Toilette umfassend einen Körper, einen Wasserring und einen Tank ist, wobei der Gießling als einstückiges Bauteil den Wasserring und den oberseitig offenen Tank aufweist, **dadurch gekennzeichnet, dass** die Druckgussform (1) aus wenigstens fünf miteinander lösbar verbindbaren Formteilen besteht, nämlich aus einem Bodenteil (2), zwei Seitenteilen (3,4) mit jeweils einer angeformten Hälfte (5, 6) einer Vorderwand, einer Rückwand (7) und einem Deckelteil (8), wobei die Formteile eine Kavität, die der Außenform des Gießlings (18) entspricht, begrenzen, und wobei am Bodenteil (2) ein Keilelement (12) vorgesehen ist, das zumindest abschnittsweise die Innenform des Wassertanks (20) begrenzt.

2. Druckgussform nach Anspruch 1, **dadurch gekennzeichnet, dass** ein zweites, separat bewegbares Keilelement (13) vorgesehen ist, das mit dem am Bodenteil (2) vorgesehenen Keilelement (12) in der Gießstellung zusammengesetzt ist und einen Formkeil (14) bildet, der die gesamte Innenform des Wassertanks (20) begrenzt.

3. Druckgussform nach Anspruch 2, **dadurch gekennzeichnet, dass** der gebildete Formkeil (14) eine sich in x- und y-Richtung zu seinem freien Ende hin verjüngende Form besitzt.

4. Druckgussform nach Anspruch 2 oder 3, **dadurch gekennzeichnet, dass** am Deckelteil (8) ein Druckluftanschluss mit nachgeschalteter Leitung vorgesehen ist, die im Bereich des zweiten Keilelement (13) mündet, so dass dieses nach Öffnen der Druckgussform (1) durch Einblasen von Druckluft ausblasbar ist.

5. Verfahren zur Herstellung einer einteiligen Toilette umfassend einen Körper, einen Wasserring und einen Tank, **dadurch gekennzeichnet, dass** unter Verwendung einer ersten Druckgussform (1) nach einem der vorangehenden Ansprüche ein erster Gießling (18) bestehend aus Wassering (19) und Tank (20) hergestellt wird, das unter Verwendung einer zweiten mehrteiligen Druckgussform (21) ein zweiter Gießling, der den Körper (22) bildet, hergestellt wird, das nach Öffnen der ersten Druckgussform (1) der Gießling (18) mit einem Transportelement (30) aufgenommen und zur zweiten Druckgussform (21) transportiert wird und nach zumindest teilweisem Öffnen der zweiten Druckgussform (21) unterhalb des Körpers (22) positioniert wird, wonach die zweite Druckgussform (21) geöffnet wird und der Körper (22) in lagerichtige Position zum ersten Gießling (18) auf dem Transportelement (30) aufgenommen wird.

6. Verfahren nach Anspruch 5, **dadurch gekennzeichnet, dass** das zweite, separat bewegliche Keilelement (13) mittels eines Roboterarms in die erste Druckgussform (1) eingebracht und entnommen wird.

7. Gießeinrichtung zur Herstellung einer einteiligen Toilette (31), umfassend eine erste Pressmaschine, der die erste Druckgussform (1) nach einem der Ansprüche 1 bis 5 zugeordnet ist, eine zweite Pressmaschine, der eine zweite Druckgussform (21) zugeordnet ist, sowie ein Transportelement (30) zum Transportieren des Gießlings (18) von der ersten Pressmaschine zur zweiten Pressmaschine.

8. Gießeinrichtung nach Anspruch 7, **dadurch gekennzeichnet, dass** eine Handhabungsvorrichtung mit einem Roboterarm zur Handhabung des zweiten Keilelements (13) vorgesehen ist.

## Claims

1. Die cast mould for producing a casting which is part of an integral toilet comprising a body, a water ring, and a tank, wherein the casting as an integral component includes the water ring and the tank which is open at the top, **characterized in that** the die cast mould (1) is composed of at least five mould parts which are releasably interconnectable, namely of a base part (2), two side parts (3, 4) each having a half (5, 6) of a front wall moulded thereon, a rear wall (7), and a cover part (8), wherein the mould parts delimit a cavity which corresponds to the external shape of the casting (18), and wherein a wedge element (12) which at least in portions delimits the internal shape of the water tank (2) is provided on the base part (2).

2. Die cast mould according to Claim 1, **characterized in that** a second and separately movable wedge element (13) which in the casting position is assembled with the wedge element (12) which is provided on the base part (2), forming a mould wedge (12) which delimits the entire internal shape of the water tank (20), is provided.

3. Die cast mould according to Claim 2, **characterized in that** the formed mould wedge (14) has a shape which tapers off in the direction x and direction y towards the free end of said mould wedge (14).

4. Die cast mould according to Claim 2 or 3, **characterized in that** a compressed-air connector having a downstream line which opens out in the region of the second wedge element (13) is provided on the cover part (8), such that said second wedge element (13) is capable of being blown out by blowing in compressed air once the die cast mould (1) has been opened.

5. Method for producing an integral toilet comprising a body, a water ring, and a tank, **characterized in that**, using a first die cast mould (1) according to one of the preceding claims, a first casting (18) composed of a water ring (19) and a tank (20) is produced, that, using a second multi-part die cast mould (21) a second casting which forms the body (22) is produced, that the casting (18), once the first die cast mould (1) has been opened, is received by a transportation element (30) and is transported to the second die cast mould (21) and, once the second die cast mould (21) has at least been partially opened, is positioned below the body (22), whereupon the second die cast mould (21) is opened and the body (22) in a positionally correct state in relation to the first casting (18) is received on the transportation element (30).

6. Method according to Claim 5, **characterized in that** the second and separately movable wedge element (13) is introduced into and removed from the first die cast mould (1) by means of a robotic arm.

7. Casting installation for producing an integral toilet (31), comprising a first press machine to which the first die cast mould (1) according to one of Claims 1 to 5 is assigned, a second press machine to which a second die cast mould (21) is assigned, and a transportation element (30) for transporting the casting (18) from the first press machine to the second press machine.

8. Casting installation according to Claim 7, **characterized in that** a handling device having a robotic arm for handling the second wedge element (13) is provided.

## Revendications

1. Moule de coulée sous pression pour la fabrication d'une pièce moulée, qui fait partie d'un WC en une partie comprenant un corps, un anneau d'eau et un réservoir, la pièce moulée présentant, en tant que composant d'une seule pièce, l'anneau d'eau et le réservoir ouvert du côté supérieur, **caractérisé en ce que** le moule de coulée sous pression (1) se compose d'au moins cinq pièces de moule pouvant être connectées de manière détachable les unes aux autres, à savoir d'une partie de fond (2), de deux parties latérales (3, 4) avec à chaque fois une moitié façonnée (5, 6) d'une paroi avant, d'une paroi arrière (7) et d'une partie de couvercle (8), les parties de moule délimitant une cavité qui correspond à la forme extérieure de la pièce moulée (18), et un élément de coin (12) étant prévu au niveau de la partie de fond (2), lequel délimite au moins en partie la forme intérieure du réservoir d'eau (20).

2. Moule de coulée sous pression selon la revendication 1, **caractérisé en ce qu'**il est prévu un deuxième élément de coin déplaçable séparément (13) qui est assemblé à l'élément de coin (12) prévu sur la partie de fond (2) dans la position de moulage et qui forme un coin de moule (14) qui délimite toute la forme intérieure du réservoir d'eau (20).

3. Moule de coulée sous pression selon la revendication 2, **caractérisé en ce que** le coin de moule formé (14) possède une forme se rétrécissant vers son extrémité libre dans la direction x et dans la direction y.

4. Moule de coulée sous pression selon la revendication 2 ou 3, **caractérisé en ce qu'**un raccord d'air sous pression avec une conduite montée en aval est prévu sur la partie de couvercle (8), la conduite débouchant dans la région du deuxième élément de coin (13) de telle sorte que celui-ci puisse être sollicité par soufflage d'air sous pression après l'ouverture du moule de coulée sous pression (1).

5. Procédé de fabrication d'un WC en une partie comprenant un corps, un anneau d'eau et un réservoir, **caractérisé en ce qu'**en utilisant un premier moule de coulée sous pression (1) selon l'une quelconque des revendications précédentes, une première pièce moulée (18) constituée de l'anneau d'eau (19) et du réservoir (20) est fabriquée, **en ce qu'**en utilisant un deuxième moule de coulée sous pression en plusieurs parties (21), une deuxième pièce moulée est fabriquée, laquelle forme le corps (22), **en ce qu'**après l'ouverture du premier moule de coulée sous pression (1), la pièce moulée (18) est reçue avec un élément de transport (30) et est transportée jusqu'au deuxième moule de coulée sous pression (21) et après ouverture au moins partielle du deuxième moule de coulée sous pression (21), est positionnée en dessous du corps (22), après quoi le deuxième moule de coulée sous pression (21) est ouvert et le corps (22) est reçu en position correcte par rapport à la première pièce moulée (18) sur l'élément de transport (30).

6. Procédé selon la revendication 5, **caractérisé en ce que** le deuxième élément de coin déplaçable séparément (13) est introduit au moyen d'un bras de robot dans le premier moule de coulée sous pression (1) et en est retiré.

7. Dispositif de coulée pour fabriquer un WC en une partie (31), comprenant une première presse à laquelle est associé le premier moule de coulée sous pression (1) selon l'une quelconque des revendications 1 à 5, une deuxième presse à laquelle est associé un deuxième moule de coulée sous pression (21), ainsi qu'un élément de transport (30) pour transporter la pièce moulée (18) de la première presse à la deuxième presse.

8. Dispositif de coulée selon la revendication 7, **caractérisé en ce qu'**un dispositif de manipulation est prévu avec un bras de robot pour manipuler le deuxième élément de coin (13).
